# EUROPÄISCHE PATENTSCHRIFT

(11) **EP 2 944 603 B1**
(45) Veröffentlichungstag und Bekanntmachung des Hinweises auf die Patenterteilung: **01.03.2017**
(21) Anmeldenummer: 15166734.2
(22) Anmeldetag: 07.05.2015
(51) Int. Cl.: B66F 9/24

(54) **VERFAHREN ZUR LEISTUNGSANZEIGE BEI EINEM FLURFÖRDERZEUG**
METHOD FOR POWER INDICATOR IN AN INDUSTRIAL TRUCK
PROCÉDÉ DESTINÉ À L'AFFICHAGE DE PUISSANCE D'UN CHARIOT DE MANUTENTION

(30) Priorität: 16.05.2014 DE 102014106985; 28.05.2014 DE 102014107588
(43) Veröffentlichungstag der Anmeldung: 18.11.2015
(73) Patentinhaber: STILL GmbH, 22113 Hamburg (DE)
(72) Erfinder: Wede, Marc, 22941 Bargteheide (DE); Morawietz, Lutz, 01277 Dresden (DE)
(74) Vertreter: Patentship Patentanwaltsgesellschaft mbH

(56) Entgegenhaltungen:
- EP-A1- 1 953 022
- EP-A1- 2 520 537
- JP-A- 2010 037 011
- US-A1- 2014 058 635

## Beschreibung

Die Erfindung betrifft ein Verfahren zur Leistungsanzeige bei einem Flurförderzeug. Insbesondere betrifft die Erfindung ein Verfahren zur Leistungsanzeige bei einem Flurförderzeug mit einem Steuergerät und mit einer Anzeigevorrichtung, sowie mit einer Energieversorgung, wobei eine von der Energieversorgung abgegebene Leistung bestimmt und auf der Anzeigevorrichtung von der Steuerung angezeigt und ein Mittelwert der Leistung über eine Messzeit gebildet wird.

Bei Flurförderzeugen, beispielsweise Schubmaststaplern oder Gegengewichtsgabelstaplern, sind sowohl Ausführungen bekannt, die batterie-elektrisch angetrieben, als auch durch einen Verbrennungsmotor als Energiequelle betrieben werden.

Bei Batterie-elektrisch betriebenen Flurförderzeugen werden Traktionsbatterien benutzt, die in ein Batteriefach des Flurförderzeugs austauschbar eingesetzt werden. Die Traktionsbatterie kann dann im Mehrschichtbetrieb durch eine aufgeladene Traktionsbatterie ersetzt werden, sobald diese entladen ist. Als Traktionsbatterie kommen dabei überwiegend Blei-Säurebatterien oder auch eventuell in einer Blei-Geltechnologie ausgeführte zum Einsatz. Zunehmend werden auch Hochleistungsbatterien eingesetzt, die eine höhere Energiedichte bei geringerem Gewicht aufweisen, vor allem Batterien mit Lithium-Ionentechnologie.

Bei allen diesen Traktionsbatterie besteht nur die Möglichkeit, eine begrenzte elektrische Energie zu speichern. Die im tatsächlichen Einsatz bei dem Flurförderzeug zur Verfügung stehende Energie dieser Traktionsbatterie ist dabei im Regelfall geringer und wird konstruktiv begrenzt, um eine Schädigung der Traktionsbatterie, insbesondere der Batteriezellen, infolge von einer Tiefentladung auszuschließen oder zumindest zu minimieren. Ebenfalls aus diesem Grund, um eine rechtzeitigen Tausch der Traktionsbatterie noch vor einer Tiefentladung zu fördern und möglichst sicherzustellen, werden die Flurförderzeuge mit Überwachungssystemen für die Traktionsbatterie ausgestattet, die einen ausreichend genauen Ladezustand, auch bezeichnet als "State Of Charge", abgekürzt "SOC", bestimmen und für eine Bedienperson bzw. einen Fahrer anzeigen.

Durch einen Verbrennungsmotor angetriebene Flurförderzeuge weisen in der Regel Sensoren auf, um den Füllstand eines Kraftstoffbehälters zu erfassen. Bei benzin- oder dieselbetriebenen Flurförderzeugen sind dies zumeist Sensoren, die den Flüssigkeitsstand in einem Kraftstofftank erfassen, beispielsweise über Schwimmsensoren. Wenn bei Verbrennungsmotoren Treibgas verwendet wird, wird häufig nur ein Druckschalter eingesetzt, der bei Unterschreiten eines bestimmten Druckwertes schaltet und diesen Zustand anzeigt. Es ist ebenfalls möglich, hier einen Sensor vorzusehen, der den tatsächlichen Füllstand der Gas-Flasche messen kann und hierdurch eine kontinuierliche Messung des Füllstandes ermöglicht.

Durch diese nach dem Stand der Technik bekannten Lösungen wird einer Bedienperson bzw. einen Fahrer keine Information gegeben, wie der momentane Energieverbrauch oder die aktuelle Leistung des Flurförderzeugs ist.

Der Einsatz von Flurförderzeugen in den Betrieben wird sehr häufig möglichst weitgehend optimiert für die betreffenden Transportaufgaben. Dies erstreckt sich insbesondere auch darauf, dass auf der Basis einer möglichst optimalen Kosten-Nutzenanalyse geeignete Traktionsbatterien sowie eine geeignete Ladeinfrastruktur eingesetzt wird. Dabei werden die Traktionsbatterie wie auch die Lademöglichkeiten möglichst knapp bemessen, um Kosten zu optimieren. Dementsprechend ergibt sich auch die Anforderungen an Flurförderzeuge, einen möglichst geringen Energieverbrauch aufzuweisen.

Zu einem großen Anteil ist der tatsächliche Energieverbrauch eines Flurförderzeugs jedoch von der Bedienung durch die Bedienperson bzw. den Fahrer abhängig. So kann beispielsweise durch eine Begrenzung der Leistung des Fahrantriebs und/oder einer Arbeitshydraulik sowie auch durch das Abschalten von nicht erforderlichen Nebenverbrauchern bereits eine erhebliche Energieeinsparung erreicht werden.

Es ist bekannt, bei Flurförderzeugen verschiedene Betriebsmodi vorzusehen, durch die eine Bedienperson bzw. ein Fahrer voreingestellte, energieeinsparende Begrenzungen auswählen kann. Durch diese Betriebsmodi wird eine Anpassung sowie Verringerung des Energieverbrauchs möglich, beispielsweise indem im Fahrbetrieb bestimmte Beschleunigungskurven und/oder maximale Geschwindigkeiten eingehalten werden müssen. Neben solchen Energiespar-Betriebsmodi, durch die dem Fahrer bzw. der Bedienperson die energiesparende Arbeit und Erledigung der Transportaufgaben erleichtert wird, kann durch die Betriebsmodi auch eine Anpassung an Vorgaben in einem Arbeitsbereich auf einem Betriebsgelände erfolgen, beispielsweise eine Limitierung eine Höchstgeschwindigkeit. Auch ist es denkbar, dass bestimmte optionale und zusätzliche Verbraucher nur in bestimmten Betriebsmodi zur Verfügung stehen, beispielsweise eine elektrische Kabinenheizung.

Nachteilig ist jedoch, dass weiterhin der Einfluss der eines Fahrers bzw. einer Bedienperson auf den resultierenden Energieverbrauch sehr beträchtlich ist. Daher wären Hilfsmittel wünschenswert, die einen Fahrer bzw. eine Bedienperson zu einer energiesparenden Arbeitsweise anhalten können.

Die JP 2010 037011 A offenbart einen batterie-elektrischen Stapler mit einer Anzeigevorrichtung für eine Restbetriebszeit.

Der vorliegenden Erfindung liegt daher die Aufgabe zugrunde, ein Verfahren zur Leistungsanzeige zur Verfügung zu stellen, das die zuvor genannten Probleme löst und mit dem eine Energie sparende Arbeitsweise mit dem Flurförderzeug unterstützt wird.

Diese Aufgabe wird durch ein Verfahren zur Leistungsanzeige bei einem Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Leistungsanzeige bei einem Flurförderzeug mit einem Steuergerät und mit einer Anzeigevorrichtung, sowie mit einer Energieversorgung, eine von der Energieversorgung abgegebene Leistung bestimmt und auf der Anzeigevorrichtung von der Steuerung angezeigt wird, wobei ein Mittelwert der Leistung über eine Messzeit gebildet wird. Erfindungsgemäß weist das Flurförderzeug mindestens zwei Betriebsmodi und/oder optionale Verbraucher auf und kann bei einem Wechsel des Betriebsmodus und/oder Schaltung optionaler Verbraucher die Leistung durch einen Korrekturwert angepasst werden.

Dadurch wird es für einen Fahrer bzw. eine Bedienperson möglich, rasch zu erkennen, wenn ein Energieverbrauch bzw. die Entnahme einer hohen Leistung aus der Energieversorgung erfolgt. Dies ermöglicht eine Anpassung des Verhaltens und eine Optimierung im Hinblick auf den Energieverbrauch. Dabei wird die Leistung bzw. der Energieverbrauch auf Basis der Einzelleistungen der Systeme in dem Flurförderzeug insbesondere der Leistungsanteile der Fahr- und Hydraulikantriebe, der Nebenverbraucher und der sonstigen Fahrzeugsysteme bestimmt. Beispielsweise können bei einem batterie-elektrisch angetriebenen Flurförderzeug der Strom und die Spannung erfasst werden, die einer Traktionsbatterie entnommen werden. Bei einem durch einen Verbrennungsmotor angetriebenen Flurförderzeug können entsprechend aus Kennfeldern und Sensordaten des Verbrennungsmotors die Leistung bestimmt werden, oder direkt aus einem Einspritzsystem der Verbrauch an Brennstoff, aus dem indirekt ein der Leistung äquivalenter Wert bestimmt werden kann, der dem Energieverbrauch entspricht. Vorteilhaft erfolgt durch die Anpassung des Korrekturwerts genauer eine Bestimmung der Leistung. Insbesondere kommt es nicht zu einer falschen Bestimmung bei einem Wechsel eines Betriebsmodus oder dem Zu- bzw. Abschalten eines optionalen Verbrauchers. Die zeitliche Filterung des Signals bzw. Bildung eines Mittelwertes muss mit einer relativ großen Zeitkonstante erfolgen, damit die im Betrieb stark schwankende Leistung ausreichend geglättet bzw. aus dieser ein Mittelwert gebildet wird. Bei einem Wechsel des Betriebsmodus von einem ersten Betriebsmodus in einen zweiten, bei dem zum Beispiel in dem zweiten Betriebsmodus ein erheblich geringerer Energieverbrauch entsteht, etwa beispielsweise nur 70 %, würde somit eine falsche Anzeige der Leistung für einen noch längeren Zeitraum erfolgen. Indem durch den Korrekturwert sofort eine Anpassung erfolgt, wird mit dem Umschalten bereits eine korrekte Leistung angezeigt.

Vorteilhaft werden in der Messzeit nur Zeiträume berücksichtigt, die als Betriebsstunden gelten.

Dadurch ergibt sich eine genauere Darstellung der Leistung, da die Bestimmung auf Basis allein von Zeitanteilen des aktiven Fahrzeugbetriebs erfolgt, der auch zu den auf summierten Betriebsstunden hinzu gezählt wird. Pausenzeiten mit einem sehr niedrigen Energieverbrauch bzw. einer sehr geringen Leistung werden in die Berechnung nicht mit aufgenommen.

In einer vorteilhaften Fortführung des Verfahrens kann die Steuerung auf der Anzeigevorrichtung eine Leistung für nicht aktive Betriebsmodi und/oder alternativ geschaltete optionale Verbraucher anzeigen.

Dadurch kann dem Fahrer angezeigt werden, ob der Wechsel des Betriebsmodus, eine Verringerung des Energieverbrauchs bzw. der Leistung mit sich bringt. Vor allem bei optionalen Verbrauchern mit relativ großem Energieverbrauch, wie beispielsweise einer elektrischen Kabinenheizung, aber auch einer mit Kraftstoff betriebenen Standheizung, wird schnell ersichtlich, welche Auswirkungen dies auf den Energieverbrauch bzw. die Leistung hat.

Die Messzeit kann 15 Minuten bis 60 Minuten betragen.

Durch diesen Zeitraum wird gewährleistet, dass über den mittleren Energieverbrauch sinnvoll Aussagen getroffen werden können.

In vorteilhafter Ausgestaltung wird ein Tendenzwert der Leistung aus einem Zeitraum kürzer als die Messzeit gebildet, bevorzugt 5 Sekunden bis 120 Sekunden.

Dadurch kann ein Fahrer bzw. eine Bedienperson erkennen, wie sich die Leistung bzw. der Energieverbrauch gerade aktuell entwickelt.

Die Steuerung kann den Tendenzwert in einem Balkendiagramm darstellen, insbesondere in einem Balkendiagramm, bei dem die Abweichung des Tendenzwertes von der Leistung durch Balken oberhalb und unterhalb einer Mittellinie dargestellt wird.

Dabei kann der mittlere Energieverbrauch bzw. die Leistung als Zahlenwert neben der Mittellinie angezeigt werden. Es sind auch Varianten ohne Anzeige der Leistung denkbar oder eine Darstellung relativ zu einer Bezugsgröße, die ein Standardwert für ein bestimmtes Flurförderzeug ist.

In einer günstigen Ausgestaltung des Verfahrens wird eine zeitliche Abfolge von Werten der Leistung dargestellt, insbesondere in Form einer zeitlichen Abfolge von Balken.

Es können Leistung- und Energieverbrauchsdaten über einen längeren Zeitraum gespeicherten angezeigt werden. Soweit Daten für eine Umschlagsleistung zur Verfügung stehen, kann der Energieverbrauch auch pro Umschlagsleistung und Zeiteinheit bewertet werden.

Die Energieversorgung kann durch einen Verbrennungsmotor erfolgen.

Die Energieversorgung kann durch eine Traktionsbatterie erfolgen.

Vorteilhaft kann die Steuerung die Leistung in ein Datennetz an ein Flotten-Managementsysteme übertragen.

Die Übertragung kann durch einen Funksender drahtlos erfolgen.

Die Übertragung an ein Flottenmanagementsystem ermöglicht weitergehende energetische Analysen auf der Basis einer größeren Anzahl von Fahrzeugen innerhalb einer Flotte.

Weitere Vorteile und Einzelheiten der Erfindung werden anhand der in den schematischen Figuren dargestellten Ausführungsbeispiele näher erläutert. Hierbei zeigt
- Fig. 1: schematisch das erfindungsgemäße Verfahren bei einem batterieelektrischen Flurförderzeug,
- Fig. 2: eine Anzeige der Leistung in drei Zuständen und
- Fig. 3: eine weitere Anzeige der Leistung.

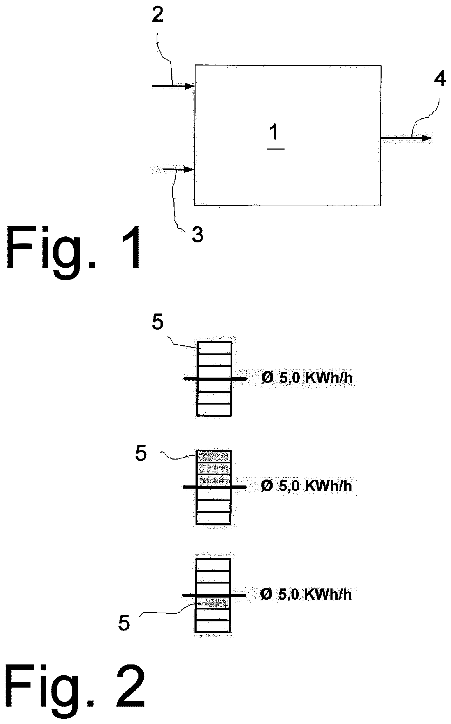

Die Fig. 1 zeigt schematisch das erfindungsgemäße Verfahren bei einem batterie-elektrischen Flurförderzeug. In einer Steuerung 1 erfolgt die Bestimmung der Leistung. Hierzu werden die elektrische Leistung von Nebenverbrauchern 2 und die elektrische Leistung, der aktive Betriebsmodus sowie der Schaltzustand optionaler Verbraucher, beispielsweise Beleuchtung oder Heizung, zugehörig zu einem Antriebs- und Fahrzeugsystem 3 der Steuerung 1 zugeführt. In der Steuerung 1 erfolgt eine Messung und/oder Berechnung der elektrischen Leistungsanteile in dem Flurförderzeug zu einer Berechnung der elektrischen Gesamtleistung. Durch eine Filterung erfolgt eine Berechnung des Energieverbrauchs bzw. der Leistung für den Zeitraum der Messzeit. Wenn ein Wechsel des Betriebsmodus stattfindet oder ein optionaler Verbraucher eingeschaltet bzw. ausgeschaltet wird, so erfolgt optional eine Korrektur der Leistung. Als Ergebnis wird eine Leistung 4 ausgegeben. Es ist auch möglich, bei einem Wechsel des Betriebsmodus, oder, wenn ein optionaler Verbraucher eingeschaltet bzw. ausgeschaltet wird, weiterhin eine Gesamtleistung zu bestimmen mithilfe des gefilterten Wertes für den Energieverbrauch, ohne eine solche Korrektur vorzunehmen.

Die Fig. 2 zeigt eine Anzeige der Leistung 4, die neben einer waagerechten Mittellinie als Zahlenwert angegeben ist. In dem Beispielsfall eine Leistung 4 von 5 kW, die entsprechend einer branchenüblichen Notation und Ausdrucksweise als KWh/h angegeben wird. Durch ein Balkendiagramm kann ein Tendenzwert für die Leistung 4 dargestellt werden. In der Fig. 2 sind dabei drei Situationen dargestellt. In der obersten Darstellung ist die Leistung 4 unverändert und der Tendenzwert entspricht der Leistung 4. Dementsprechend ist kein Balken 5 hervorgehoben. In der mittleren Darstellung ist der Tendenz werden deutlich größer, entsprechend einem zuletzt ansteigenden Energieverbrauch. Dies wird dargestellt, indem drei Balken 5 oberhalb der Mittellinie hervorgehoben sind. Die unterste Darstellung entspricht einer tendenziell abnehmenden Leistung4, bei der ein Balken 5 unterhalb der Mittellinie hervorgehoben ist.

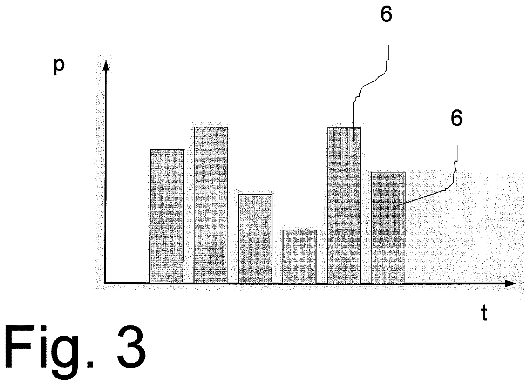

Die Fig. 3 zeigt eine weitere Anzeige der Leistung 4. in dieser Anzeige wird ein historischer Verlauf der Leistungen in Form von über einer Zeitachse t aufgetragenen Balken 6 dargestellt.

## Patentansprüche

1. Verfahren zur Leistungsanzeige bei einem Flurförderzeug mit einem Steuergerät und mit einer Anzeigevorrichtung, sowie mit einer Energieversorgung, wobei eine von der Energieversorgung abgegebene Leistung (4) bestimmt und auf der Anzeigevorrichtung von der Steuerung angezeigt und ein Mittelwert der Leistung (4) über eine Messzeit gebildet wird,
**dadurch gekennzeichnet,**
**dass** das Flurförderzeug mindestens zwei Betriebsmodi und/oder optionale Verbraucher aufweist und bei einem Wechsel des Betriebsmodus und/oder Schaltung optionaler Verbraucher die Leistung (4) durch einen Korrekturwert angepasst wird.

2. Verfahren nach Anspruch 1,
**dadurch gekennzeichnet,**
**dass** in der Messzeit nur Zeiträume berücksichtigt werden, die als Betriebsstunden gelten.

3. Verfahren nach Anspruch 1 oder 2,
**dadurch gekennzeichnet,**
**dass** die Steuerung auf der Anzeigevorrichtung eine Leistung (4) für nicht aktive Betriebsmodi und/oder alternativ geschaltete optionale Verbraucher anzeigen kann.

4. Verfahren nach einem der Ansprüche 1 bis 3,
**dadurch gekennzeichnet,**
**dass** die Messzeit 15 Minuten bis 60 Minuten beträgt.

5. Verfahren nach einem der Ansprüche 1 bis 4,
**dadurch gekennzeichnet,**
**dass** ein Tendenzwert der Leistung (4) aus einem Zeitraum kürzer als die Messzeit gebildet wird, bevorzugt 5 Sekunden bis 120 Sekunden.

6. Verfahren nach Anspruch 5,
**dadurch gekennzeichnet,**
**dass** die Steuerung den Tendenzwert in einem Balkendiagramm darstellt, insbesondere in einem Balkendiagramm, bei dem die Abweichung des Tendenzwertes von der Leistung (4) durch Balken (5) oberhalb und unterhalb einer Mittellinie dargestellt wird.

7. Verfahren nach einem der Ansprüche 1 bis 6,
**dadurch gekennzeichnet,**
**dass** eine zeitliche Abfolge von Werten der Leistung (4) dargestellt wird, insbesondere in Form einer zeitlichen Abfolge von Balken (6).

8. Verfahren nach einem der Ansprüche 1 bis 7,
**dadurch gekennzeichnet,**
**dass** die Energieversorgung durch einen Verbrennungsmotor erfolgt.

9. Verfahren nach einem der Ansprüche 1 bis 8,
**dadurch gekennzeichnet,**
**dass** die Energieversorgung durch eine Traktionsbatterie erfolgt.

10. Verfahren nach einem der Ansprüche 1 bis 9,
**dadurch gekennzeichnet,**
**dass** die Steuerung die Leistung (4) in ein Datennetz an ein Flotten-Managementsysteme übertragen kann.

11. Verfahren nach Anspruch 10,
**dadurch gekennzeichnet,**
**dass** die Übertragung durch einen Funksender drahtlos erfolgen kann.

## Claims

1. Method for displaying the power in an industrial truck having a control device and having a display device as well as having a power supply, wherein a power level (4) which is output by the power supply is determined and is displayed on the display device by the controller, and a mean value of the power level (4) over a measuring time is formed,
**characterized**
**in that** the industrial truck has at least two operating modes and/or optional consumers, and in the event of a change-over of the operating mode and/or switching of optional consumers the power level (4) is adapted by means of a correction value.

2. Method according to Claim 1,
**characterized**
**in that** only time periods which are considered to be operating hours are taken intro account in the measuring time.

3. Method according to Claim 1 or 2,
**characterized**
**in that** the controller can display on the display device a power level (4) for non-active operating modes and/or alternatively switched optional consumers.

4. Method according to one of Claims 1 to 3,
**characterized**
**in that** the measuring time is 15 minutes to 60 minutes.

5. Method according to one of Claims 1 to 4,
**characterized**
**in that** a tendency value of the power level (4) is formed from a time period shorter than the measuring time, preferably 5 seconds to 120 seconds.

6. Method according to Claim 5,
**characterized**
**in that** the controller represents the tendency value in a bar diagram, in particular in a bar diagram in which the deviation of the tendency value from the power level (4) is represented by bars (5) above and below a centre line.

7. Method according to one of Claims 1 to 6,
**characterized**
**in that** a chronological sequence of values of the power level (4) is represented, in particular in the form of a chronological sequence of bars (6).

8. Method according one of Claims 1 to 7,
**characterized**
**in that** the power supply is effected by means of an internal combustion engine.

9. Method according to one of Claims 1 to 8,
**characterized**
**in that** the power supply is effected by means of a traction battery.

10. Method according to one of Claims 1 to 9,
**characterized**
**in that** the controller can transmit the power level (4) into a data network leading to a fleet management system.

11. Method according to Claim 10
**characterized**
**in that** the transmission can be effected in a wireless fashion by means of a radio transmitter.

## Revendications

1. Procédé d'indication de puissance sur un chariot de manutention comprenant un contrôleur et comprenant un dispositif d'affichage, et comprenant également une alimentation en énergie, une puissance (4) délivrée par l'alimentation en énergie étant déterminée et affichée sur le dispositif d'affichage de la commande et une valeur moyenne de la puissance (4) en fonction d'un temps de mesure étant calculée,
**caractérisé en ce**
**que** le chariot de manutention possède au moins deux modes de fonctionnement et/ou des consommateurs optionnels, et la puissance (4) est adapté par une valeur de correction lors d'un changement de mode de fonctionnement et/ou de la commutation d'un consommateur optionnel.

2. Procédé selon la revendication 1, **caractérisé en ce que** seuls sont pris en compte dans le temps de mesure les périodes qui comptent en tant qu'heures de fonctionnement.

3. Procédé selon la revendication 1 ou 2, **caractérisé en ce que** la commande peut afficher sur le dispositif d'affichage une puissance (4) pour le mode de fonctionnement non actif et/ou les consommateurs optionnels commutés en alternance.

4. Procédé selon l'une des revendications 1 à 3, **caractérisé en ce que** le temps de mesure dure de 15 minutes à 60 minutes.

5. Procédé selon l'une des revendications 1 à 4, **caractérisé en ce qu'**une valeur de tendance de la puissance (4) est formée à partir d'une période plus courte que le temps de mesure, de préférence de 5 secondes à 120 secondes.

6. Procédé selon la revendication 5, **caractérisé en ce que** la commande représente la tendance dans un graphe à barres, notamment dans un graphe à barres dans lequel l'écart entre la valeur de tendance et la puissance (4) est représenté par des barres (5) au-dessus et au-dessous d'une ligne médiane.

7. Procédé selon l'une des revendications 1 à 6, **caractérisé en ce qu'**une séquence dans le temps de valeurs de la puissance (4) est représentée, notamment sous la forme d'une séquence dans le temps de barres (6).

8. Procédé selon l'une des revendications 1 à 7, **caractérisé en ce que** l'alimentation en énergie est réalisée par un moteur à combustion interne.

9. Procédé selon l'une des revendications 1 à 8, **caractérisé en ce que** l'alimentation en énergie est réalisée par une batterie de traction.

10. Procédé selon l'une des revendications 1 à 9, **caractérisé en ce que** la commande peut transmette la puissance (4) dans un réseau de données à un système de gestion de flotte.

11. Procédé selon la revendication 10, **caractérisé en ce que** la transmission peut être effectuée sans fil par un émetteur radioélectrique.
